# EUROPEAN PATENT SPECIFICATION

(11) **EP 1 405 146 B1**
(45) Date of publication and mention of the grant of the patent: **28.03.2007**
(21) Application number: 02746915.4
(22) Date of filing: 09.07.2002
(51) Int. Cl.: G05B 19/042, G05B 19/05

(54) **A MODULE CONTROL SYSTEM**
SYSTEM ZUR STEUERUNG VON MODULEN
SYSTEME DE COMMANDE MODULAIRE

(30) Priority: 12.07.2001 US 903899
(43) Date of publication of application: 07.04.2004
(73) Proprietor: Schneider Automation Inc., North Andover, Massachusetts 01845 (US)
(72) Inventor: WEBSTER, Steven, Raymond, NH 03077 (US); WOLEJKO, Paul, Newburyport, MA 01950 (US); PFEIFFER, Allan, Melrose, MA 02176 (US); ROLLAND, Jean-Francise, F-92500 Rueil Malmaison (FR)
(74) Representative: Gray, John James
(86) International application number: PCT/US2002/021514
(87) International publication number: WO 2003/007094

(56) References cited:
- EP-A- 0 338 077
- DE-A- 19 502 499
- US-A- 4 689 755
- US-A- 4 972 365

## Description

### Technical Field

The present invention relates generally to a communication system comprising an input moduled and an output module. More specifically, the present invention relates to a modular, reflexive control system wherein input and output modules communicate directly without interaction of a controller.

### Background of the Invention

One type of control system incorporates a controller, i.e., a programmable logic controller or fieldbus coupler, to coordinate interaction among operably connected input and output modules on a communication bus. Typically, the controller monitors the modules and facilitates actions within the system. Input and output modules include, and are not limited to: sensors, relays, gauges, valves, message displays, switches, limit switches, proximity switches, motor starters, motor controllers and any other like device as well as traditional 10 modules for control systems. The input module monitors, or senses, a condition. A signal representing the condition is received by the input module and transmitted to the controller for processing. The controller utilizes the representative signal according to a specific function. Generally, the function requires the controller to perform an operation related to the signal and transmit the result of the function to the appropriate output module.

An example of this type of control system is disclosed in U.S. Patent No. 4,972,365 This discloses a program in a higher-level language for a programmable controller, stored as a hex-coded file in a memory in a main processor unit. The file is downloaded to a processor-based 1/0 logic module that translates the program into a multi-table data structure for relating the state of output devices on controlled equipment to the state of input devices on the equipment. After translation, an 1/0 control routine of lower-level, machine-language processor instructions is executed every 500 microseconds to control the output devices in response to changing conditions at the input devices and in response to the output functions embedded in the data structure as a result of translating the downloaded program. In a first embodiment the higher-level language is of the ladder-diagram type, while in a second embodiment the higher-level language incorporates state transition logic.

Such a control process may include a production assembly line, i.e., a bottling process wherein an input module senses the presence of a liquid within a passing bottle. If the input module senses that a passing bottle does not contain a liquid, the input module will transmit a signal alerting the controller to this irregularity. The controller receives the signal from the input module and utilizes it to determine if further action is needed. If so, the controller will transmit a control-type signal to the selected output module for a responsive action, i.e., removing the empty bottle from the production line or halting the conveyor belt transporting the bottle, etc.

It is apparent that monitoring the liquid filled bottles requires communication between the modules and the controller. Communication between the input and output modules requires participation of the controller. in developing a control system, the process designer must be cognitive of the timing parameters and limitations associated with controller communication. For the above bottling process, the production assembly should not proceed at a rate of speed wherein irregularities such as an empty or uncapped bottle evades removal or identification even though the system has detected an imperfection.

### Summary of the Invention

The present invention is directed to a reflexive control system utilizing input and output modules. The modules are operably connected to a communication bus or network. The input module has an input and an output and is responsive to a condition, the condition being represented by a signal. In response to the representative signal received by the input module, the input module will transmit the signal onto the communication bus. Preferably, the representative signal is transmitted onto the communication bus in response to a change in the representative signal itself. An output module having a reflexive function receives the representative signal. The reflexive function utilizes the representative signal and outputs the result, a state signal, onto the communication bus wherein subsequent actions are administered throughout the control system. Alternatively, the output of the output module can be stored for later operations. The output module is structured to execute the reflex function without requiring input from the controller.

Another embodiment of the present Invention is a reflexive control system incorporated on a network. Whether the control system utilizes a communication bus or network, the preferred communication protocol is CANopen. However, other network protocols can be also be implemented, i.e., Profibus, Interbus, and Ethernet.

An object of the present invention is to eliminate or reduce the use of a controller within a control system of input and output modules. Without the controller, the time required to execute a control function is decreased and the installation, maintenance and programming of such a system is easier and less expensive.

Another object of the present invention is to provide a simple, reflexive control system comprising a plurality of input modules and output modules. Because the modules can communicate directly, there is no need for a controller. However, a controller can be included within the control system. In such a system, the ability for the modules to communicate without interaction of the controller will allow the controller to be utilized in a more effective manner.

Yet another object of the present invention is a reflexive control system that is inexpensive to install and easy to maintain or configure.

A further object of the present invention is a reflexive control system comprising a plurality of input modules and output modules. The control system is adapted to be easily configurable wherein input modules and output modules are easily exchanged within the control system.

A still further object of the present invention is a control system having a plurality of input modules and output modules wherein the modules reflexively respond to signals transmitted throughout the control system.

Yet a further object of the present Invention is a reflexive control system integrated on a CANopen network.

And another object of the present invention is an output module having a reflexive function.

The main aspect of the invention, and other optional features are as disclosed in the appended claims.

Other features and advantages of the invention will be apparent from the following specification taken in conjunction with the following drawings.

### Brief Description of the Drawings

FIGURE 1 is a block diagram of one embodiment of the present invention;
FIGURE 2 is a block diagram of an alternative embodiment of the present invention;
FIGURE 3 is a block diagram of a reflex function implementation in a module object dictionary;
FIGURE 4 is a block diagram of another reflex function implementation in a module object dictionary;
FIGURE 5 is a block diagram of a means for configuring the reflex function in the present invention;
FIGURE 6 is a block diagram of a reflex function, i.e., an integer comparison;
FIGURE 7 is a block diagram of a reflex function, i.e., a counter;
FIGURE 8 is a block diagram of a reflex function, i.e., a timer;
FIGURE 9 is a comparison of reaction time of two control systems, one having a reflex function and one without a reflex function; and,
FIGURE 10 is a block diagram of a control system of the present invention.

### Detailed Description of the Preferred Embodiment

While this invention is susceptible of embodiments in many different forms, there is shown in the drawings and will herein be described in detail a preferred embodiment of the present invention with the understanding that the present disclosure Is to be considered as an exemplification of the principles of the invention and is not intended to limit the broad aspect of the present invention to the embodiment illustrated.

The present invention is directed to a reflexive control system 10 comprising an input module 12 and an output module 14. The modules are operably connected to a communication bus or network 16. Although the preferred protocol utilized by the control system 10 is CANopen, other protocols can also be used, i.e., Profibus, Interbus and Ethernet. The input module 12 monitors a condition to be controlled by the control system 10. The input module 12 is responsive to a signal representative of the condition wherein the input module transmits the representative signal onto the communication bus 16. The output module 14 comprises a reflex function 18. The output module 14 is responsive to the representative signal wherein the reflex function 18 converts the representative signal into a state signal. The output module 14 transmits the state signal onto the communication bus 16.

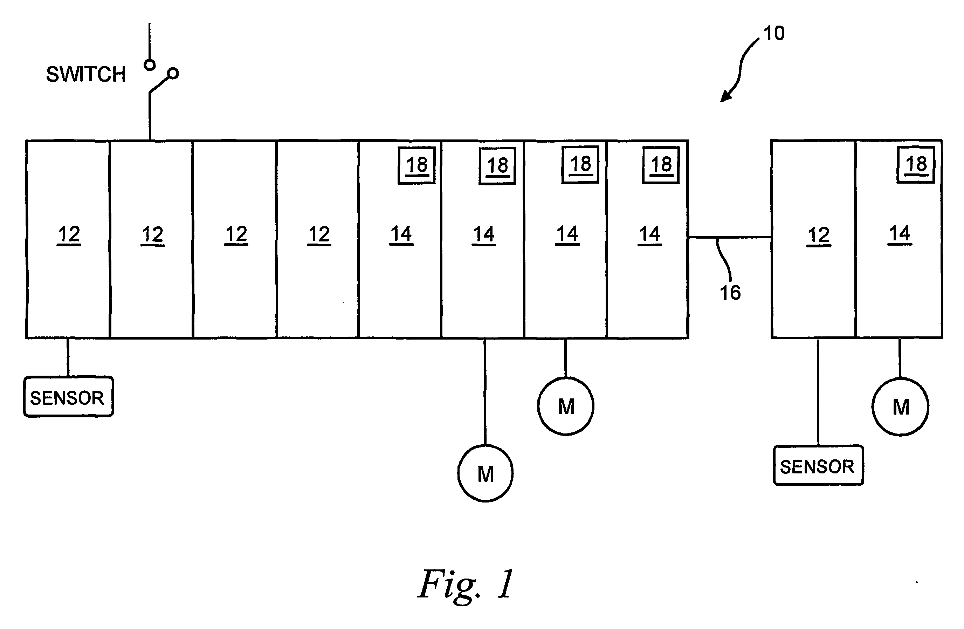

Referring to FIGURE 1, the control system 10 comprises an input module 12 and an output module 14. Both modules are operably connected to a communication bus or network 16. The input module 12 monitors a condition. The condition is used as a factor for controlling the condition itself or a related operation. The condition is represented by a signal. The input module 12 is responsive to the condition via interconnection with the representative signal. In response to the representative signal, the input module 12 transmits the signal to a predetermined output module 14. Preferably, the input module 12 will not transmit the representative signal until a change in the signal occurs.

The selected output module 14 contains a simple function that utilizes the representative signal transmitted by the input module 12. The simple function reflexively responds to the distinct representative signal received from the input module 12. This reflex function 18 is capable of converting the representative signal into a state signal wherein the output of the reflex function 18 can be transmitted onto the communication bus 16, transmitted to a hardware module or stored in the control system 10 for later use, i.e., linked or cascaded modules.

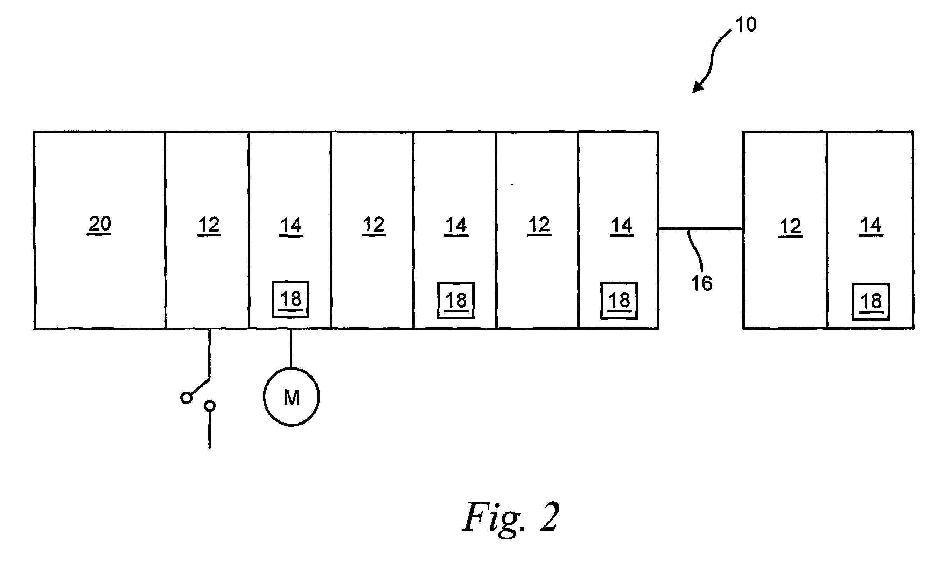

The reflexive control system 10 comprises input and output modules that a user can select and arrange to meet specific needs of an application. The input and output modules are connected on a communication bus or a network 16. The modules include remote 10 modules such as sensors, relays, gauges, valves, message displays, switches, limit switches, proximity switches, motor starters, motor controllers and any other like device as well as traditional 10 modules for control systems. The IO modules communicate directly with each other, without utilizing a controller 20. Although the present invention is directed to a control system 10 without a master scanner or controller 20, i.e., programmable logic controller, it is capable of being operably connected to a controller 20. FIGURE 2. Thus, the present invention allows direct communication between the modules regardless of a controller 20 being present or not. The output module 14 output can be stored within the output module 14 or the master scanner 20.

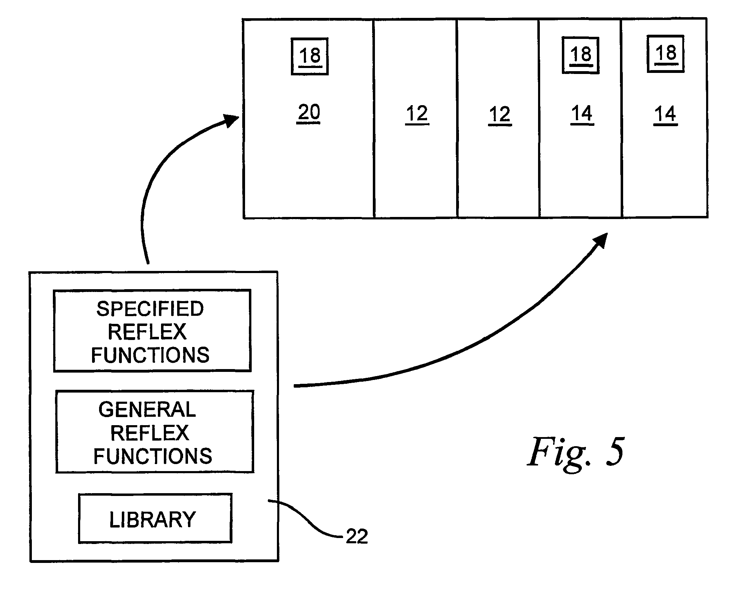

The reflex function 18 is a routine that performs a specific, unsophisticated action on an input signal within the control system 10. Preferably, a PC based configuration tool 22 is utilized to configure the reflex function 18 on the output module 14. FIGURE 5. However, any type of means for configuring the reflex function 18 to the output module 14 may be utilized, including, but not limited to: a programmable logic controller 20, a modular design circuit, an EPROM, an EEPROM, a programmable magnetic card, an exchangeable integrated circuit, etc.

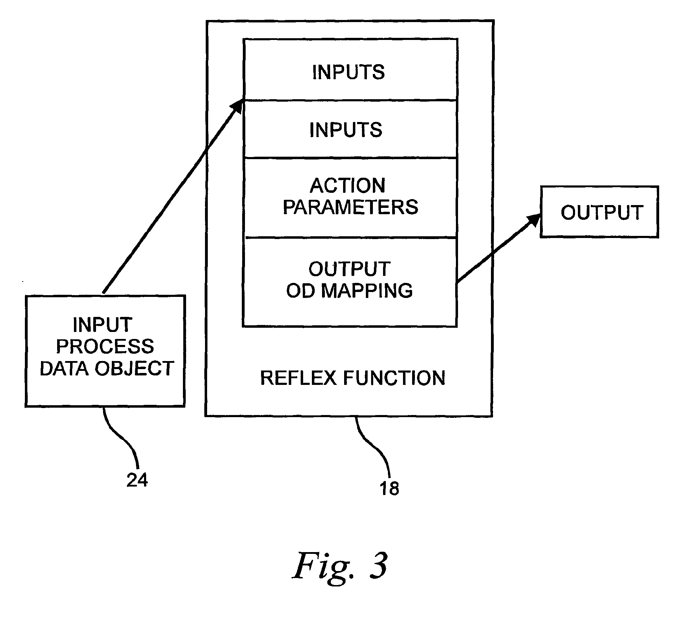

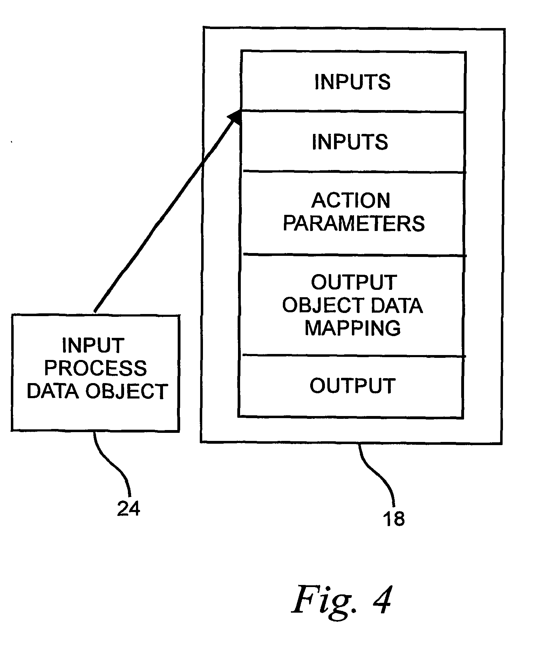

Preferably, the reflex function 18 is implemented statically in the output module 14 firmware. The scope of the reflex function 18 configuration involves determining which input and output modules to utilize and the interaction between the modules on the control system 10. Many modules will not have non-volatile memory, so the reflex function 18 is specified using entries in the manufacturer specific CANopen object dictionary 24. FIGURES 3 and 4. This allows for configuration of the reflex function 18 during boot-up or during a hot-swap of a module by a standard CANopen configuration manager.

The reflex function 18 is configured to execute within the output module 14 that receives the representative signal transmitted by the input module 12. The result of the reflex action performed on the representative signal is a state signal. The state signal is transmitted by the output module 14 to the communication bus 16.

In this way, the control system 10 operates without a controller 20. The controller-less control system 10 decreases communication time on the system and increases the efficient use of the system's bandwidth by improving the control response time. In addition, the reflex function 18 of several output modules can be cascaded together.

In an alternative embodiment of the present invention wherein a controller 20 is utilized, the state signal output of the output module 14 can also be transmitted to a master scanner, preferably a programmable logic controller 20, monitoring the control system 10. The master scanner 20 receives the state signal output and stores it for later use by using a temporary memory in the master scanner. The temporary memory provides a storage location for an intermediate value, thus facilitating to reduce the workload of the master scanner 20. The master scanner's I/O table can also be utilized to exchange process diagnostics or reflex logic conditions.

The types of actions preformed by the reflex function 18 include, but are not limited to: Boolean logic, comparisons, counters, timers and edge detection. The reflex functions can be defined between system inputs and outputs. The reflex function 18 can also cross modules and all reflex functions preferably comply with IEC 1131.

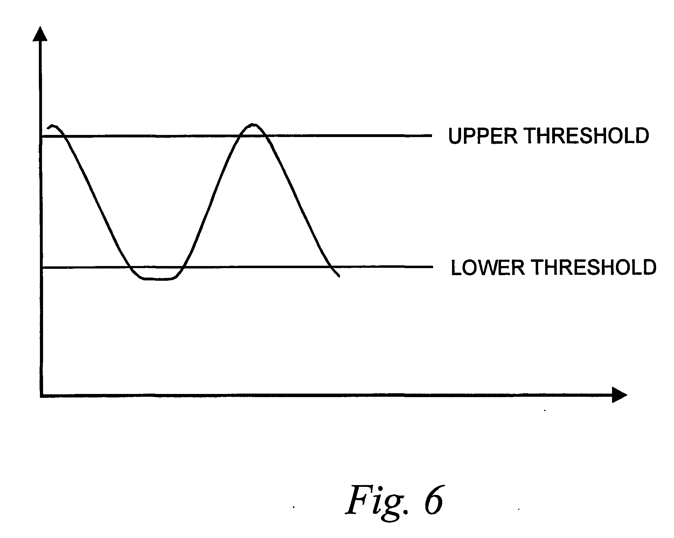

The reflex function 18 is capable of executing Boolean logic on the representative signal received by the output module 14. Such Boolean logic operations include: AND, OR, XOR, NAND, XNOR, etc. The reflex function 18 is also capable of comparing an integer value against a threshold level, i.e., <, >, =. The integer value can also be compared to an upper and lower threshold level. FIGURE 6.

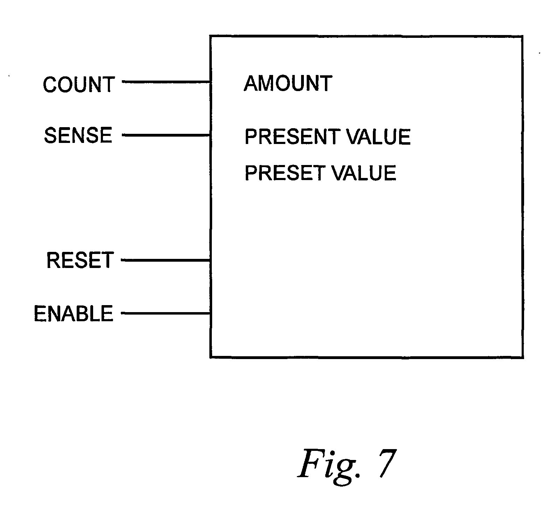

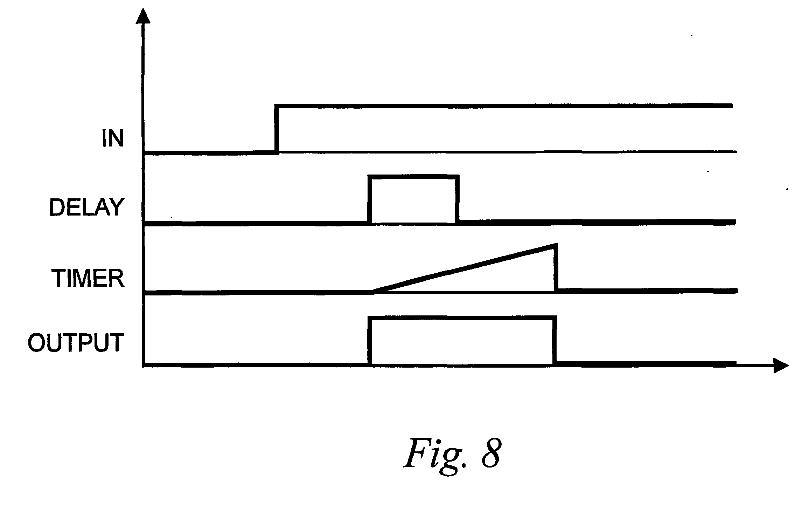

A counter operation such as up, down, up/down, flip-flop; i.e., SR, RS (with "hold last value" and defined initial vale) can also be performed by a reflex function 18. FIGURE 7. The reflex function 18 counts the pulses associated with an input module 12. The count total can be transmitted throughout the control system 10 or stored in the output module 14. Similar to a counter, a timer is also capable of being executed by a reflex function 18. FIGURE 8. A list of some timers that can be configured within the output module 14 include: on, off, delay to start, delay to stop, calibrated pulse on input rising edge and calibrated pulse on input falling edge. A reflex function 18 can also be configured to detect edge transitions of a signal. The edge detection can be performed on the rising or falling edge of the signal. And some control functions can also be performed by the reflex function 18, i.e., two-position hysteresis and action/reaction diagnostics.

The reflex function 18 is beneficial for implementation in applications constrained by critical timing concerns. The reflex function 18 facilitates a high speed reaction to changes in critical conditions requiring a fast, localized response. The reflex function 18 provides a simple, reflexive output similar to an "intelligent relay," without requiring training for sophisticated IEC compatible logic.

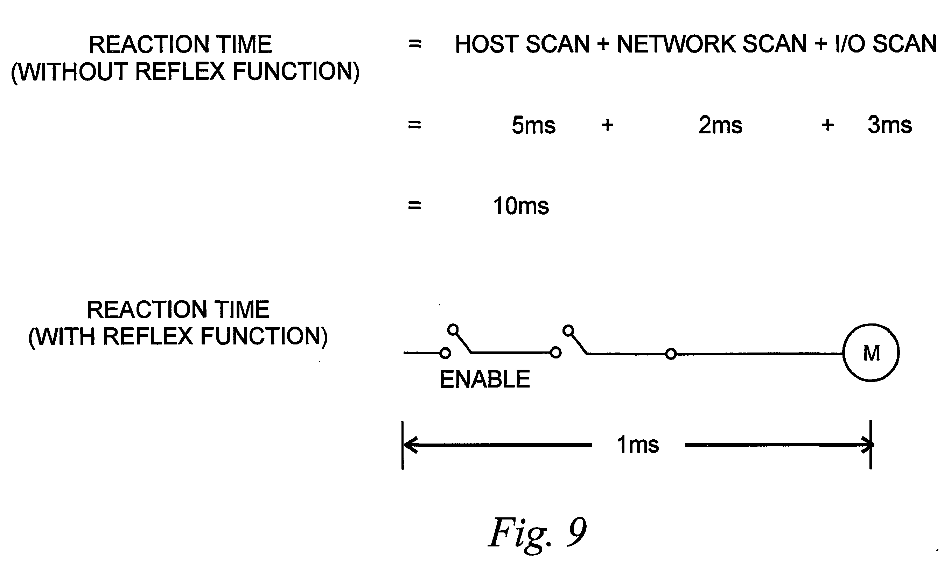

A field bus network and a master scanner controller 20 are each slower than the near immediate, "responsive," actions capable of an output module 14 having a reflex function 18. The combination of a controller's processing time in addition to the network time as well as the bus time, will be greater than 10 ms in most instances. FIGURE 9. Controller-less control systems incorporating output modules comprising reflex functions are capable of providing similar control functionality to a control system 10 utilizing a controller 20, but with a significant reduction in time.

The reflex function 18 is used for time critical situations involving an input module 12 and at least one output module 14 on one control system 10. Such situations can be controlled with minimal logic combinations between input modules 12 and output modules 14. Utilizing a controller 20 for such a situation adversely affects the time limitation. The combination of a controller's processing time in addition to the network time as well as the bus time, will be significantly greater than the 2 ms required limitation. FIGURE 9. Utilizing a controller-less control system incorporates output modules comprising reflex functions that provide satisfactory control functionality, and with a significant reduced time, i.e., approximately 1-2 ms.

Reflex functions 18 can be cascaded together. In addition, if a master scanner 20 is utilized, a virtual input/output location can be used as a memory scratch pad to hold reflex function outputs. The scratch pad stores intermediate values. The output of the output module 14 can also be stored on the output module itself. An 1/0 table in the master scanner 20 can be used to exchange the process diagnostics information or reflex function conditions.

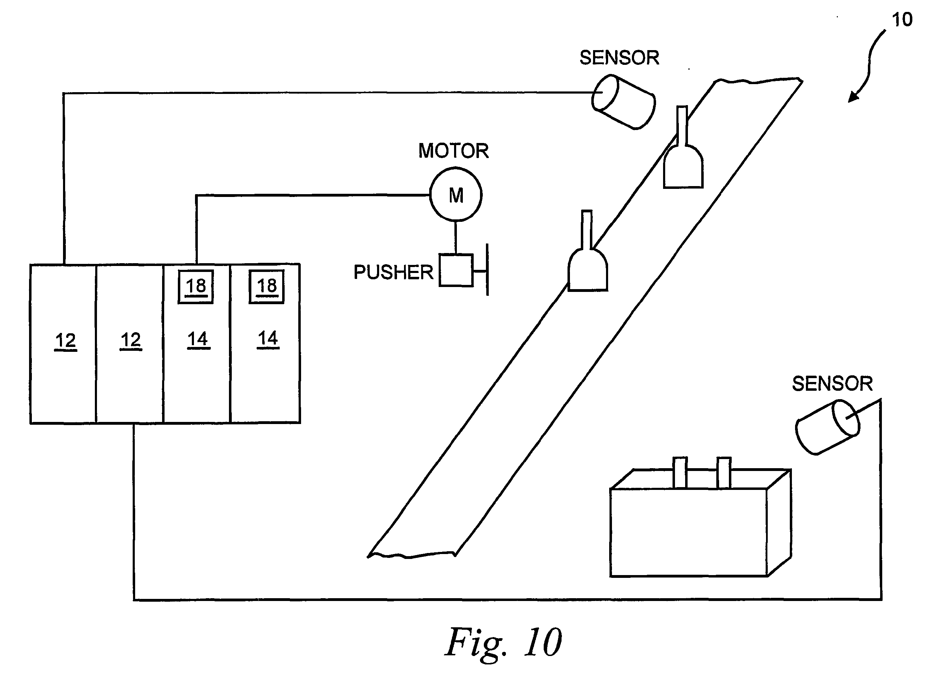

One such time critical situation is a control system 10 for a bottling assembly process. FIGURE 10. Clean, empty bottles are transported via a conveyor belt. The bottles are filled with a liquid, sealed with a bottle cap and boxed for shipping. The bottle cap check requires immediate actions within 1-2 ms. Use of a controller in such a control system will extend the time to approx. 10 ms. FIGURE 9. An input module 12, i.e., cap sensor, is located near the conveyor belt. Other input modules such as a box full sensor or bottle fill sensor can also be connected to the control system 10. An output module 14, kicker motor, is connected to the control system 10 as well. As capped bottles proceed on the conveyor belt, the cap sensor senses the presence of the cap and transmits a representative signal of such condition on the communication bus 16 to a predetermined output module 14. In this application, the cap sensor is set to transmit its representative signal to the kicker motor. Upon receiving the signal from the cap sensor, the kicker motor's reflex function 18 will utilize the cap sensor signal and reflexively output a state signal to the kicker motor to activate the cylinder to remove the capped bottle from the conveyor belt. Alternatively, if the cap sensor does not sense a bottle cap on the bottle, no cap sensor representative signal will be sent to the output module.

Similarly, when the box full sensor senses that the box is full, its operably connected input module 12 can transmit the representative signal to a predetermined output module 14 to remove the filled box or alert personnel to do the same. The reflex function 18 for the input module 12 of the box full sensor can be a counter type or some other type.

Alternatively, an enable input can be utilized to separate input on each function. It can also be a master control relay for all functions.

While the specific embodiments have been illustrated and described, numerous modifications come to mind without significantly departing from the scope of the invention, and the scope of protection is only limited by the scope of the accompanying Claims.

## Claims

1. A control system (10) comprising an input module (12) structured to respond to a condition by transmitting a representative signal and an output module (14) operably coupled to the input module, the output module including a reflex function (18) structured to produce a state signal in response to receiving the representative signal from the input module **characterised in that** the output module is coupled to the input module by a network (16) and that the output module is structured to execute the reflex function without requiring input from a controller (20).

2. A control system as defined in Claim 1, further comprising the controller operably coupled to the input module and the output module.

3. A control system as defined in Claim 2 further comprising a configuration tool operably coupled to the output module, the configuration tool being structured to configure the reflex function.

4. A control system as defined in Claim 3, wherein the configuration tool is structured to configure the reflex function by programming firmware associated with the output module.

5. A control system as defined in any of Claims 1 to 3, wherein the reflex function comprises at least one of a Boolean logic function, a comparison function, a counter function, a timer function, and an edge detection function.

6. A control system as defined in any preceding claim, wherein the first reflex function (18) is specified in an object dictionary (24).

7. A control system as defined in Claim 6, wherein the object dictionary (24) is embedded within a master scanner.

8. A control system as defined in any preceding claim, wherein a first network address is assigned to the input module and a second network address is assigned to the output module.

9. A control system as defined in any preceding claim, wherein the network utilizes a CANopen protocol.

## Patentansprüche

1. Ein Steuersystem (10), das ein Eingabemodul (12), welches strukturiert ist, um durch Übertragen eines repräsentativen Signals auf einen Zustand zu reagieren, und ein Ausgabemodul (14), welches bedienbar an das Eingabemodul gekoppelt ist, beinhaltet, wobei das Ausgabemodul eine Spiegelungsfunktion (18) umfasst, die strukturiert ist, um eine Zustandsmeldung als Reaktion auf das Empfangen des repräsentativen Signals aus dem Eingabemodul zu produzieren, **dadurch gekennzeichnet, dass** das Ausgabemodul durch ein Netzwerk (16) an das Eingabemodul gekoppelt ist und dass das Ausgabemodul strukturiert ist, um die Spiegelungsfunktion auszuführen, ohne dass Eingabe aus einer Steuerung (20) erforderlich ist.

2. Steuersystem gemäß Anspruch 1, das ferner die Steuerung, die bedienbar an das Eingabemodul und das Ausgabemodul gekoppelt ist, beinhaltet.

3. Steuersystem gemäß Anspruch 2, das ferner ein Konfigurationsinstrument, das bedienbar an das Ausgabemodul gekoppelt ist, beinhaltet, wobei das Konfigurationsinstrument strukturiert ist, um die Spiegelungsfunktion zu konfigurieren.

4. Steuersystem gemäß Anspruch 3, wobei das Konfigurationsinstrument strukturiert ist, um die Spiegelungsfunktion durch Programmierung der Firmware, die mit dem Ausgabemodul verbunden ist, zu konfigurieren.

5. Steuersystem gemäß einem der Ansprüche 1 bis 3, wobei die Spiegelungsfunktion mindestens eine aus einer Booleschen Logikfunktion, einer Vergleichsfunktion, einer Gegenfunktion, einer Zeitschalterfunktion und einer Kantenerkennungsfunktion beinhaltet.

6. Steuersystem gemäß einem der vorhergehenden Ansprüche, wobei die erste Spiegelungsfunktion (18) in einem Objektverzeichnis (24) genauer beschrieben ist.

7. Steuersystem gemäß Anspruch 6, wobei ein Objektverzeichnis (24) innerhalb eines Master Scanners eingeschlossen ist.

8. Steuersystem gemäß einem der vorhergehenden Ansprüche, wobei eine erste Netzadresse dem Eingabemodul zugeteilt ist und eine zweite Netzadresse dem Ausgabemodul zugeteilt ist.

9. Steuersystem gemäß einem der vorhergehenden Ansprüche, wobei das Netzwerk ein CANopen Protokoll benutzt.

## Revendications

1. Un système de commande (10) comprenant un module d'entrée (12) structuré pour répondre à une condition en transmettant un signal représentatif et un module de sortie (14) couplé de façon opérationnelle au module d'entrée, le module de sortie incluant une fonction réflexe (18) structurée pour produire un signal d'état en réponse à la réception du signal représentatif provenant du module d'entrée **caractérisé en ce que** le module de sortie est couplé au module d'entrée par un réseau (16) et que le module de sortie est structuré pour exécuter la fonction réflexe sans requérir d'entrée provenant d'un dispositif de commande (20).

2. Un système de commande tel que défini dans la revendication 1, comprenant en outre le dispositif de commande couplé de façon opérationnelle au module d'entrée et au module de sortie.

3. Un système de commande tel que défini dans la revendication 2 comprenant en outre un outil de configuration couplé de façon opérationnelle au module de sortie, l'outil de configuration étant structuré pour configurer la fonction réflexe.

4. Un système de commande tel que défini dans la revendication 3, dans lequel l'outil de configuration est structuré pour configurer la fonction réflexe en programmant des microprogrammes associés au module de sortie.

5. Un système de commande tel que défini dans n'importe lesquelles des revendications 1 à 3, dans lequel la fonction réflexe comprend au moins une fonction parmi une fonction de logique booléenne, une fonction de comparaison, une fonction de compteur, une fonction de minuteur, et une fonction de détection de fronts.

6. Un système de commande tel que défini dans n'importe quelle revendication précédente, dans lequel la première fonction réflexe (18) est spécifiée dans un dictionnaire d'objets (24).

7. Un système de commande tel que défini dans la revendication 6, dans lequel le dictionnaire d'objets (24) est incorporé au sein d'un scanner maître.

8. Un système de commande tel que défini dans n'importe quelle revendication précédente, dans lequel une première adresse réseau est assignée au module d'entrée et une deuxième adresse réseau est assignée au module de sortie.

9. Un système de commande tel que défini dans n'importe quelle revendication précédente, dans lequel le réseau utilise un protocole CANopen.
